# EUROPEAN PATENT APPLICATION

(11) **EP 1 462 666 A1**
(43) Date of publication of application: **29.09.2004**
(21) Application number: 04075881.5
(22) Date of filing: 18.03.2004
(51) Int. Cl.: F16B 37/04

(54) **Securing assembly for securing an object to a profiled-section element with a substantially C-shaped cross section**

(30) Priority: 24.03.2003 NL 1023003
(71) Applicant: Flamco B.V., 2802 AC Gouda (NL)
(72) Inventor: Jaspers, Antonius Nicolaas Johannes, 2804 PH Gouda (NL); Kemper, Dimitri Wasil, 1019 HX Amsterdam (NL); Postma, Jan, 3344 AL Hendrik Ido Ambacht (NL)
(74) Representative: Iemenschot, Johannes Andreas, Ir.

(57) **Abstract**

A securing assembly (1) for securing an object to a profiled-section element (2) with a substantially C-shaped cross section comprises a substantially annular base part (11) with a central opening and an elongate nut element (15), which is connected to the base part at a certain distance from the base part. The securing assembly (1) can be secured to a C-shaped profiled-section element (2) by tightening the nut element (15) in the longitudinal slot (8) of the profiled-section element, with the result that the nut element engages behind the flanges (6, 7) of the profiled-section element. The securing assembly is held in place by two resilient lips (17, 18) which are arranged on the base part on the side of the nut element and interact with the flanges (6, 7) and two locking lips (19, 20), which are arranged on the side of the nut element, latch into the longitudinal slot (8) and prevent the securing element from being unscrewed.

## Description

The invention relates to a securing assembly in accordance with the preamble of claim 1.

A securing assembly of this type is known from NL-A-1010655. In the known securing assembly, the base part substantially comprises a flat ring. The nut element is retained on the base part by two diametrically opposite limbs which are connected to the base part next to the central opening in the base part and extend perpendicular thereto and which project into the wall of the threaded bore in the nut element through two diametrically opposite cutouts and engage behind the nut element by means of hook-like ends. Furthermore, the securing assembly is provided with a spring element which extends from the base part towards the nut element.

The known securing assembly has a number of drawbacks. If the securing element is coupled to a profiled-section element with a C-shaped cross section, with the nut element being fitted through the longitudinal slot of the profiled-section element and engaging beneath the flanges of the profiled-section element, it is not locked against rotation. The securing assembly may be loosen by vibration. Also, it may turn undesirably in the event of the securing assembly being displaced along the profiled-section element. Furthermore, if, during assembly, the nut element engages beneath one of the flanges, further assembly is made more difficult, since the nut element then adopts a skew position and can only be fitted beneath the other flange with difficulty.

It is an object of the invention to provide an improved securing assembly which also overcomes the drawbacks of the known securing assembly.

This object is achieved by a securing assembly according to Claim 1.

The limbs by which the nut element is connected to the base part ensure that the securing assembly, during mounting on a profiled-section element, is centred with respect to the profiled-section element, with the result that the nut element cannot engage beneath just one flange of the profiled-section element. The locking lips which engage in the longitudinal slot when the securing assembly is mounted on a profiled-section element prevent the securing assembly from rotating back. The resilient lips, when the securing assembly is mounted on a profiled-section element, press onto the flanges of the profiled-section element and in the process pull the nut element onto the other side of the flanges. Furthermore, on account of the frictional force between the resilient lips and the flanges of the profiled-section element, the resilient lips counteract undesired displacement of the mounted securing assembly along the profiled-section element. This is advantageous in particular if the profiled-section element is positioned vertically. The frictional force is such that the securing element can be displaced along the profiled-section element by hand.

Preferred embodiments of the connecting assembly according to the invention are defined in the subclaims.

The invention also relates to a combination of a securing assembly and a profiled-section element according to claim 8.

The invention will be explained in more detail below with reference to the drawing, in which:
Fig. 1 shows a side view of a certain embodiment of a securing assembly according to the invention,
Fig. 2 shows a view of the securing assembly shown in Fig. 1 as seen in the direction of arrow II in Fig. 1,
Fig. 3 shows a perspective view of the base part of the securing assembly shown in Fig. 1 together with the mount for the nut element which is integrally connected to it,
Fig. 4 shows a perspective view, seen from another side, of the component illustrated in Fig. 3,
Fig. 5 shows a view corresponding to that shown in Fig. 2, in which the nut element and the mount are indicated by dashed lines,
Fig. 6 shows the nut element of the securing assembly shown in Fig. 1,
Fig. 7 shows the securing assembly in the state in which it is secured to a profiled-section element,
Fig. 8 shows a view in the direction of arrow VIII in Fig. 7, and
Figs. 9-11 show a number of possible uses for the securing assembly shown in Fig. 1.

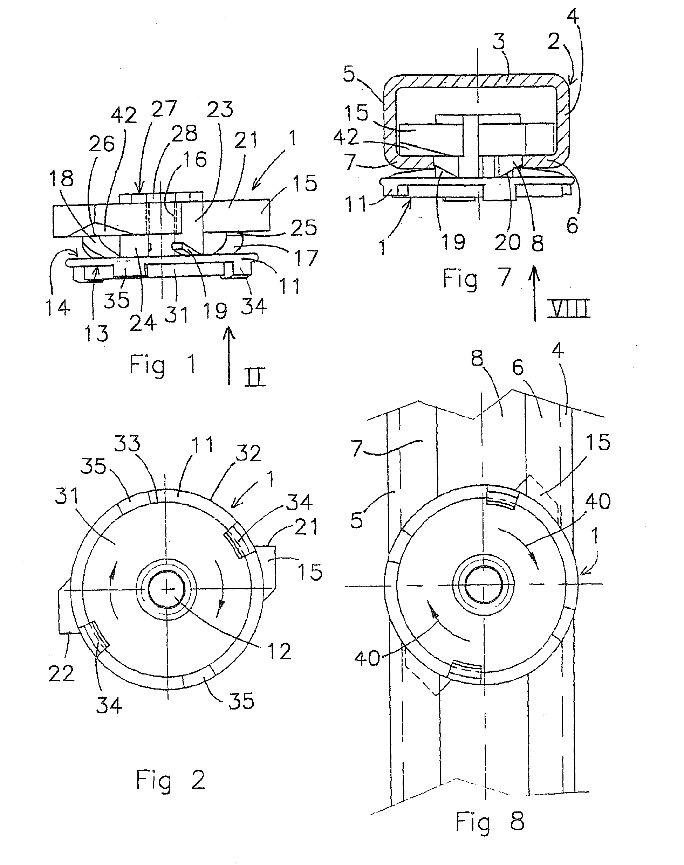

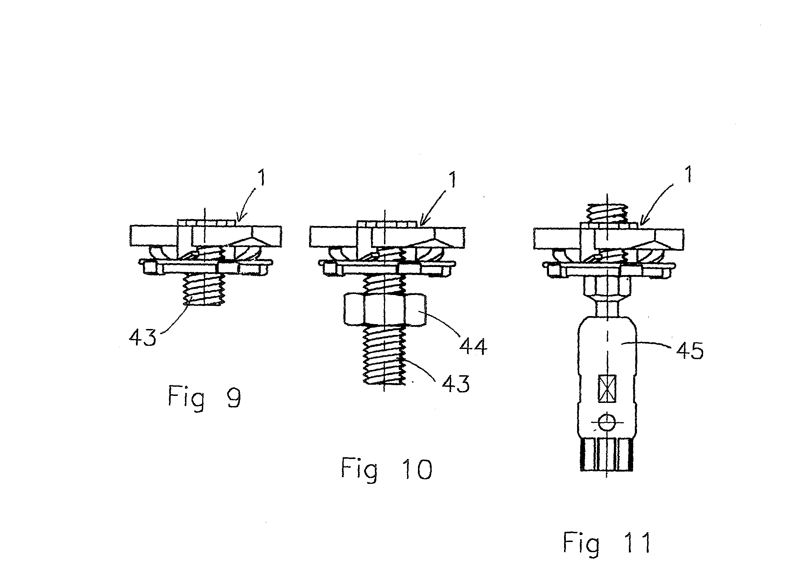

Fig. 1 and 2 show a specific embodiment of securing assembly 1 for securing an object to a profiled-section element 2, illustrated in Fig. 7 and 8, with a substantially C-shaped cross section with a base wall 3, two upright side walls 4 and 5 adjoining the base wall and two flanges 6 and 7 which adjoin the upright side walls 4 and 5, face one another and between them delimit a longitudinal slot 8.

The securing assembly comprises a substantially annular base part 11 with a central opening 12 and with a first side 13 and a second side 14, as well as an elongate nut element 15 which is located on the second side 14 of the base part 11, has defined transverse and longitudinal dimensions, is connected to the base part 11 at a certain distance from the base part 11 and is provided, in the central region, with a threaded bore 16 which is located coaxially with respect to the central opening 12 in the base part. The size of the central opening 12 in the base part 11 is sufficient to allow through a threaded stud which fits into the threaded bore 16 in the nut element 15.

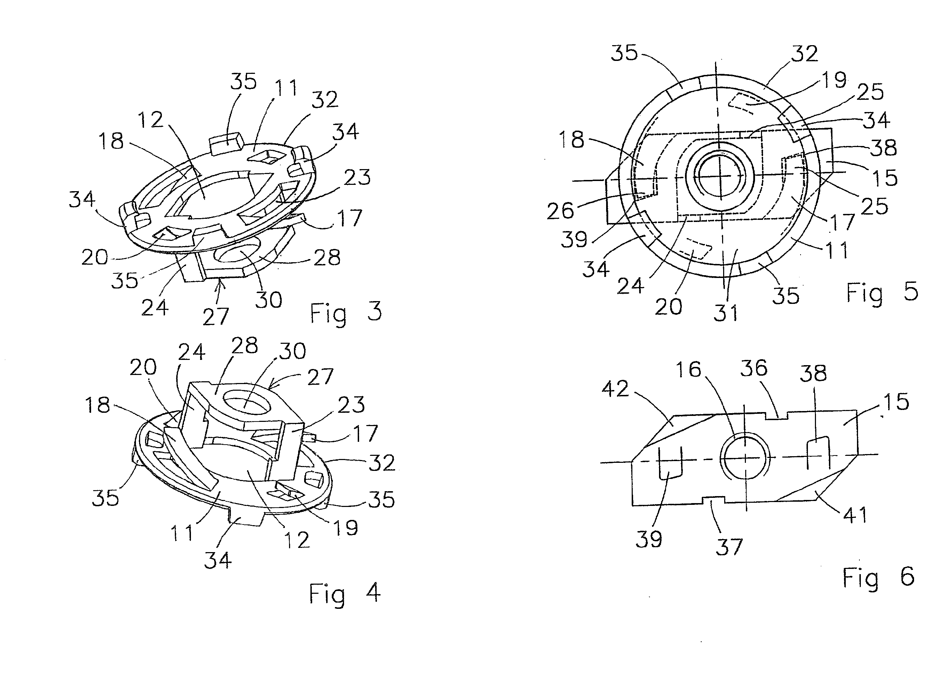

On the second side 14, the annular base part 11 is provided with two resilient lips 17 and 18 which are located diametrically opposite one another and extend, from the second side 14 of the base part 11, obliquely in the circumferential direction from the second side 14, and two resilient locking lips 19 and 20, which are located diametrically opposite one another and, from the second side 14 of the base part 11, extend obliquely away from the second side 14 in the same circumferential direction as the resilient lips 17 and 18 (cf. also Fig. 3 and 4). The locking lips 19 and 20 are shorter than the resilient lips 17 and 18 and are arranged on the base part 11 offset at an angle in the circumferential direction of the annular base part 11 with respect to the resilient lips 17 and 18. The elongate nut element 15 is connected to the base part 11 by means of two limbs 23 and 24, which are secured to the longitudinal sides 21 and 22 of the nut element 15, and are positioned in such a manner with respect to the annular base part 11 that the free ends 25 and 26 of the resilient lips 17 and 18, as seen in a plane located parallel to the annular base part 11, lie in the region of the nut element.

On the second side 14, the annular base part 11 is provided with a mount 27 for the elongate nut element 15. The mount 27 comprises the two limbs 23 and 24, which extend perpendicularly from the second side 14 of the base part 11 and are secured to the base part 11 diametrically opposite one another next to the central opening 12, and a connecting piece 28, which connects the ends of the limbs 23 and 24 located at a distance from the base part 11 to one another, is located substantially parallel to the base part 11 and has a passage opening 30, which is located coaxially with respect to the threaded bore 16 in the nut element 15 and the size of which is sufficient to allow through a threaded stud which fits into the threaded bore 16 in the nut element 15. The connecting piece 28 preferably engages in a slightly clamping manner, at the location of the passage opening 30, on a threaded stud which has been screwed into the threaded bore 16. This prevents the threaded stud from being unscrewed unintentionally. Moreover, during mounting of a securing assembly together with a threaded stud which has already been screwed into it, in the event of further rotation of the threaded stud the nut element 15 is carried along by the threaded stud.

The nut element 15 is clamped with its longitudinal sides 21 and 22 between the limbs 23 and 24 of the mount 27 and bears against the connecting piece 30. Cutouts 36 and 37 (cf. Fig. 6), into which the limbs 23 and 24 latch, are formed in the longitudinal sides 21 and 22 of the nut element. The limbs 23 and 24 of the mount 27 are secured to the base part 11 in the vicinity of where the locking lips 19 and 20 are secured.

In the preferred embodiment illustrated here, the annular base part 11 and the mount 27 connected thereto for the nut element 15 are produced from a single piece. This component is illustrated in Fig. 3 and 4. This component is preferably produced from plastics material, in particular by injection moulding.

As can be seen from Fig. 1 and 2, the annular base part 11, which is preferably made from plastics material, is provided, on the first side, with a concentrically arranged metal reinforcing ring 31 which bears against the base part 11. The reinforcing ring 31 is held in place on the base part 11 by retaining lips 34 and 35, which are arranged on the outer circumference 32 of the base part 11 and engage on the outer circumference 33 of the reinforcing ring 31, the retaining lips 34 being of hook-like design and engaging around the reinforcing ring 31, and the retaining lips 35 being used to centre the reinforcing ring 31.

As can be seen from Fig. 5 and 6, recesses or cutouts 38 and 39, into which the free ends 25 and 26 of the resilient lips 17 and 18 can latch, are arranged on that side of the nut element 15 which faces the resilient lips 17 and 18. As indicated in Fig. 5 and 6, the shape of these cutouts 38 and 39 can be matched to the shape of the ends 25 and 26 of the resilient lips 17 and 18. However, this is not imperative. The recesses may also adopt a different shape, for example a round shape. When the ends 25 and 26 of the resilient lips 17 and 18 latch into the cutouts 38 and 39, the nut element 15 is locked such that it cannot be removed.

Figs. 7 and 8 show a combination of the securing assembly 1 shown in Fig. 1 and a profiled-section element 2 with a substantially C-shaped cross section, the securing assembly 1 being in the mounted state. For mounting, the securing assembly 1 is placed onto the profiled-section element 2, with the nut element 15 being placed into the longitudinal slot 8. Then, the securing assembly 1 is rotated in the direction indicated by the arrows 40, with the nut element 15 engaging beneath the flanges 7 and 8 of the profiled-section element 2 until the end sections of the nut element 15 come into contact with the upright walls 5 and 6 of the profiled-section element 2. To make it easier for the nut element 15 to engage beneath the flanges 7 and 8, the nut element 15 is preferably provided, at the location of two opposite corners (front corners in the direction of rotation of the nut element 15), with inclined run-up edges 41 and 42 (cf. also Fig. 6).

In the mounted state of the securing assembly 1, the locking lips 19 and 20 latch into the longitudinal slot 8 of the profiled-section element 2, with the free ends of the locking lips 19 and 20 virtually bearing against the edges of the longitudinal slot 8 (cf. Fig. 7) . As a result, the locking lips 19 and 20 prevent the securing assembly 2 from rotating back.

Figs. 9-11 show a number of possible uses of the securing assembly 1 according to the invention.

In Fig. 9, a single threaded stud 43 has been screwed into the securing assembly.

In Fig. 10, a locking nut 44 has also been screwed onto a threaded stud 43 which has been screwed into the securing assembly 1.

In Fig. 11, the securing assembly is provided with a ball joint 45 screwed into it.

When the locking nut 44 in Fig. 10 and the ball joint 45 in Fig. 11 are tightened, and when the securing assembly 1 is mounted in a profiled-section element 2, the base part 11, which may optionally be provided with a reinforcing ring 31, and the nut element 15 will move towards one another, with the securing assembly being clamped securely to the profiled-section element 2. In this context, it is advantageous if the limbs 23 and 24 of the mount 27 are of slightly flexible design, so that they can easily bend.

It will be clear that the application is not restricted to the embodiments and applications described. Other embodiments which fall within the scope of protection of the claims are also possible.

## Claims

1. Securing assembly for securing an object to a profiled-section element with a substantially C-shaped cross section with a base wall, two upright side walls which adjoin the base wall and two flanges which adjoin the upright side walls, face towards one another and between them delimit a longitudinal slot, comprising:
- a substantially annular base part with a central opening and with a first side and with a second side, and
- an elongate nut element with defined transverse and longitudinal dimensions, which is located on the second side of the base part, is connected to the base part at a certain distance from the base part and is provided, in the central region, with a threaded bore which is located coaxially with respect to the central opening in the base part,
the size of the central opening in the base part being sufficient to allow through a threaded stud which fits into the threaded bore in the nut element,
**characterized in that** the annular base part is provided, on the second side, with two resilient lips which are located diametrically opposite one another and, from the second side of the base part, extend obliquely away from the second side in the circumferential direction, and two resilient locking lips, which are located diametrically opposite one another and, from the second side of the base part, extend obliquely away from the second side in the same circumferential direction as the resilient lips, the locking lips being shorter than the resilient lips and being arranged offset at an angle in the circumferential direction of the annular base part with respect to the resilient lips on the base part, and **in that** the elongate nut element is connected to the base part by means of two limbs which are secured to the longitudinal sides of the nut element and is positioned in such a manner with respect to the annular base part that the free ends of the resilient lips, as seen in a plane located parallel to the annular base part, lie in the region of the nut element.

2. Securing assembly according to claim 1, in which the annular base part is provided, on the second side, with a mount for the elongate nut element.

3. Securing assembly according to claim 2, in which the mount comprises the two limbs, which extend perpendicularly from the second side of the base part and are secured to the base part diametrically opposite one another next to the central opening, and a connecting piece, which connects the ends of the limbs, located at a distance from the base part, to one another, lies substantially parallel to the base part and has a passage opening, which is located coaxially with respect to the threaded bore in the nut element and the size of which is sufficient to allow through a threaded stud which fits into the threaded bore in the nut element, the nut element being clamped with its longitudinal sides between the limbs of the mount and bearing against the connecting piece.

4. Securing assembly according to claim 3, in which the limbs of the mount are secured to the base part in the vicinity of the location where the locking lips are secured.

5. Securing assembly according to one of claims 2-4, in which the annular base part and the mount for the nut element connected thereto are made in a single piece from plastics material, preferably by injection moulding.

6. Securing assembly according to claim 5, in which the annular base part is provided, on the first side, with a concentrically arranged metal reinforcing ring which bears against the base part.

7. Securing assembly according to claim 6, in which the reinforcing ring is held on the base part by retaining lips which are arranged on the outer circumference of the base part and engage on the outer circumference of the reinforcing ring.

8. Combination of a securing assembly according to one of the preceding claims and a profiled-section element with a substantially C-shaped cross section with a base wall, two upright side walls which adjoin the base wall and two flanges which adjoin the upright side walls, face towards one another and between them delimit a longitudinal slot, **characterized in that** the maximum transverse dimension of the nut element of the securing assembly is smaller than the width of the longitudinal slot of the profiled-section element, and the maximum longitudinal dimension of the nut element, measured along a line which intersects the centre axis of the threaded bore, is larger than the distance between the upright side walls of the profiled-section element.
